Europäisches Patentamt

European Patent Office

Office européen des brevets

(11) Numéro de publication: **0 289 428**
**A1**

(12) **DEMANDE DE BREVET EUROPEEN**

(21) Numéro de dépôt: 88401046.3

(22) Date de dépôt: 28.04.88

(51) Int. Cl.⁴: **B 62 B 3/04**
A 63 B 47/02

(30) Priorité: 29.04.87 FR 8706270

(43) Date de publication de la demande:
02.11.88 Bulletin 88/44

(84) Etats contractants désignés:
AT BE CH DE ES GB GR IT LI LU NL SE

(71) Demandeur: Cousin, Jean-Philippe
501 Place Mendès France
F-59290 Wasquehal (FR)

(72) Inventeur: Cousin, Jean-Philippe
501 Place Mendès France
F-59290 Wasquehal (FR)

(74) Mandataire: Lepage, Jean-Pierre
Cabinet Lemoine & Associés 12, Boulevard de la Liberté
F-59800 Lille (FR)

(54) Chariot mobile de transport d'accessoires sportifs.

(57) L'invention est relative à un chariot mobile de transport d'accessoires sportifs destiné notamment à assister les entraîneurs d'équipes de football, rugby, les éducateurs sportifs et les moniteurs d'éducation physique et sportive pour les séances avec ballons.

Le chariot mobile (1) comprend un châssis (2) monté sur roues (3) et une réserve de ballons (6) stockée dans un panier (7) fixé au châssis (2). Selon l'invention, le chariot mobile (1) présente de nombreux moyens pour libérer tout ou partie des ballons (6) placés dans le panier (7).

L'invention concerne plus particulièrement les fabricants d'accessoires de sport.

Fig. 1

EP 0 289 428 A1

## Description

L'invention est relative à un chariot mobile de transport d'accessoires sportifs. Elle trouvera notamment son application pour assister les entraîneurs d'équipes de football, rugby, les éducateurs sportifs et les moniteurs d'éducation physique et sportive pour les séances avec ballons.

Dans le domaine sportifs, il est nécessaire d'entretenir les conditions physiques des joueurs et également d'améliorer leurs performances par un entraînement adapté entre les différentes épreuves.

Ce suivi doit être sérieusement réalisé surtout s'il s'agit d'une équipe de haut niveau. Il s'accompagne généralement d'une assistance médicale qui permet de surveiller la santé des sportifs.

Bien que la présente invention soit plus particulièrement tournée vers le football, néanmoins elle intéresse tous les sports qui utilisent des accessoires : ballons, balles ou autres.

Il faut d'ailleurs souligner à ce sujet que le nombre d'accessoires nécessaires lors de l'entraînement est généralement beaucoup plus conséquent qu'au cours du jeu. Par exemple, alors que pour une équipe de football, un seul ballon est nécessaire pour jouer, au cours de l'entraînement il est pratiquement indispensable de disposer d'un ballon par joueur afin que chacun d'eux puisse s'entraîner simultanément. Des balises coniques sont également employées pour simuler la présence de joueurs adverses et permettre aux sportifs de s'entraîner à contourner des obstacles.

L'une des missions de l'entraîneur sportif est précisément de diriger l'équipe pour améliorer ses performances. Par le choix des hommes et des exercices, il a la responsabilité des performances de l'équipe.

Comme cela a été souligné précédemment, le matériel nécessaire pour pratiquer l'entraînement est divers et comporte de nombreux articles. Outre les ballons et balises coniques, l'entraîneur doit disposer également d'un matériel de chronométrage, chasubles et d'une boîte à pharmacie afin de pouvoir soigner d'éventuels joueurs blessés.

Jusqu'a présent, le transport de ces différents accessoires sportifs n'a jamais été satisfaisant étant donné qu'il n'existe pas de matériel spécialisé. Tout au plus regroupe-t-on les différents ballons dans un grand filet, hormis ce rangement les autres accessoires doivent être transportés individuellement.

Lorsqu'il s'agit de sortir les accessoires en début d'entraînement, l'entraîneur peut compter sur la collaboration des différents joueurs qui, volontiers, chacun emporte une partie de l'équipement.

Par contre, en fin d'entraînement, alors que les joueurs sont fatigués, ceux-ci sont plus pressés de rentrer aux vestiaires que d'aider l'entraîneur à récupérer les accessoires d'autant plus que ces derniers sont généralement disséminés sur le terrain.

Par conséquent, la récupération des accessoires doit généralement être faite par l'entraîneur seul qui doit faire plusieurs voyages pour rentrer l'intégralité du matériel sportif dont il a la charge.

Il s'agit d'un travail ingrat en pénible, aussi des essais d'emploi de chariots mobiles ont été faits pour tenter d'aider l'entraîneur à transporter seul le matériel.

Les sacs ne sont pas pratiques étant donné que le matériel à transporter est très volumineux. Des essais ont été faits avec les chariots à roulettes utilisés par les ménagères pour faire leurs courses. Il s'agit déjà d'un progrès, on peut cependant leur reprocher plusieurs défauts, tout d'abord leur volume est insuffisant pour contenir l'ensemble des accessoires et tout y est rangé pêle-mêle. Ensuite, lorsqu'il s'agit de sortir la dizaine de ballons présents dans le sac, le ramassage des derniers ballons du fond est pénible. Or, il est nécessaire de sortir les accessoires sportifs non seulement sur le terrain mais également au vestiaire pour en assurer leur nettoyage. Dans ces conditions, le gain de temps obtenu par l'emploi d'un chariot ménager sur roulettes traditionnel est minime.

Le but principal de la présente invention est de présenter un chariot mobile de transport d'accessoires sportifs, destiné à l'usage des entraîneurs, qui soit spécialisé dans cette fonction. Les différents détails de construction ont fait l'objet d'une étude pour répondre à un besoin spécifique de l'entraîneur.

L'ensemble des accessoires est transporté en un seul voyage, tous les accessoires sont à portée de mains de l'entraîneur, le ramassage se fait en un temps minime.

La conception du chariot mobile de la présente invention permet également de résoudre le problème du nettoyage de l'équipement sportif. En effet, très souvent en fin d'entraînement, surtout si le terrain est boueux, les accessoires sont sales et doivent faire l'objet d'un nettoyage. Avec le chariot mobile de la présente invention, il est possible de nettoyer les accessoires avec un simple jet d'eau, ceci sans les extraire du chariot mobile. Cette technique est très avantageuse et permet d'assurer un bon entretien du matériel sans difficulté particulière.

Avec le chariot mobile de la présente invention, le problème de la sortie des ballons a également été résolu. Dorénavant, aucun effort n'est exigé et les ballons peuvent très rapidement être mis à la disposition des joueurs.

Avec le chariot mobile de la présente invention, le rangement des accessoires peut être très rapidement réalisé, aussi l'entraîneur peut-il s'attendre au concours des joueurs pour l'aider dans cette tâche.

D'autres buts et avantages de la présente invention apparaîtront au cours de la description qui va suivre qui n'est cependant donneé qu'à titre indicatif et qui n'a pas pour but de la limiter.

Le chariot mobile de transport d'accessoires sportifs, destiné notamment à assister les entraîneurs d'équipes de football, rugby, éducateurs sportifs, moniteurs et professeurs d'éducation physique et sportive utilisant des ballons lors de leurs séances, qui comprend un châssis monté sur roues et une réserve de ballons stockés dans un panier fixé au châssis, est caractérisé par le fait qu'il présente des moyens pour libérer tout ou partie des ballons placés dans le panier.

L'invention sera mieux comprise à la lecture de la description suivante accompagnée de dessins en annexe parmi lesquels :

- la figure 1 illustre la présentation extérieure du chariot mobile de l'invention, spécialisé pour le transport des accessoires de football,

- la figure 2 schématise le fonctionnement d'une première conception des moyens de libération des ballons stockés dans le panier,

- la figure 3 schématise une seconde conception des moyens utilisés pour libérer les ballons stockés dans le panier,

- les figures 4a, 4b, 4c et 4d illustrent le principe de fonctionnement d'un panier compartimenté,

- les figures 5a et 5b représentent le fonctionnement d'un chariot mobile à panier en filet souple,

- la figure 6 représente un chariot mobile à panier basculant,

- la figure 7 représente un mode d'exécution pour l'évacuation des ballons à l'aide d'une trappe latérale.

La présente invention vise un chariot mobile de transport d'accessoires sportifs. Elle est plus particulièrement destinée à assister les entraineurs d'équipes de football, rugby ou autres.

Bien que l'invention ait été plus spécialement réalisée dans le cadre des équipes de football, elle pourra néanmoins s'étendre aux autres sports tout spécialement ceux qui utilisent des ballons.

Pour entretenir les conditions physiques des joueurs d'une équipe sportive, et améliorer leurs performances, il est indispensable de leur donner l'occasion de s'entraîner entre les différents matchs.

Précisément, le rôle de l'entraîneur sera d'assurer le suivi tant sportif que médical de l'équipe pour lui donner les meilleures chances de vaincre.

Pour ce faire, chacun des joueurs est soumis à un entraînement au cours duquel il a l'occasion de s'exercer pour améliorer sa technique.

Dans le cadre d'une équipe de football, chacun des joueurs doit, au cours de l'entraînement, disposer d'un ballon et de balises coniques pour simuler la présence d'un joueur adverse. Ces accessoires sont amenés par l'entraîneur sur les terrains et doivent être récupérés en fin de séance.

Jusqu'à présent, leur transport est mal aisé et l'entraîneur doit souvent se plaindre d'être mal assisté pour récupérer les accessoires lorsque les joueurs sont exténués.

Précisément, la présente invention a pour but d'apporter une assistance à l'entraîneur pour lui permettre de transporter et ranger les accessoires nécessaires sans aide extérieure.

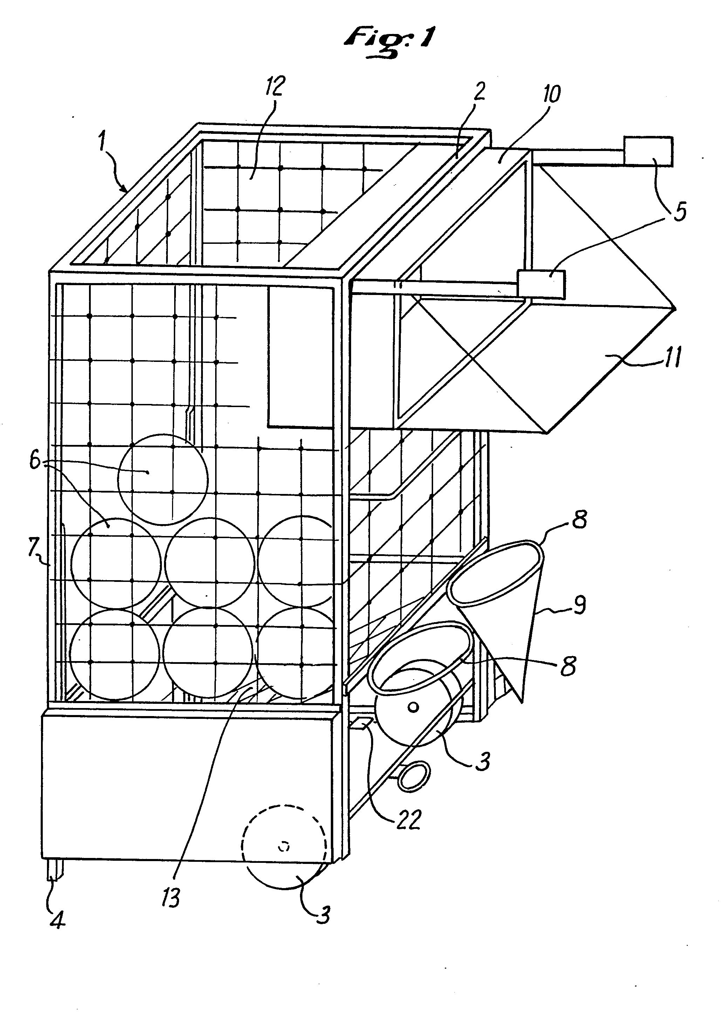

La figure 1 illustre la présentation extérieure du chariot mobile (1) de transport des accessoires. Ce chariot comprend un châssis (2) monté sur roues (3). Il est préférable d'utiliser un seul essieu et des roues (3) de taille relativement grande et large car ces caractéristiques sont bien adaptées pour franchir des petits obstacles et les irrégularités du sol.

En position de repos, le chariot mobile (1) repose également sur des pieds (4) qui assurent un freinage du chariot même si celui-ci est placé sur une pente légère.

Le chariot (1) comprend des poignées (5) de manoeuvre qui facilitent sa manutention.

Le chariot mobile (1) comporte une réserve de ballons (6) stockés dans un panier (7) fixé sur le châssis (2).

Le châssis (2) comporte également des anneaux (8) susceptibles de recevoir des balises coniques (9). Une boîte de rangement (10) permet également de recevoir le matériel de chronométrage nécessaire et les éléments de pharmacie indispensables pour apporter les premiers soins à un éventuel joueur blessé.

Un plateau de travail (11) rabattable contre la boîte de rangement (10) pourra également être apprécié pour y entreposer les objets qui restent à portée de mains.

Le panier (7) présente à sa partie supérieure une ouverture (12) par laquelle les ballons (6) pourront facilement être introduits. En fin de séance, l'entraîneur peut facilement récupérer ses ballons en déplaçant le chariot mobile (1) au niveau de ces derniers et il lui suffit de lancer les ballons (6) dans le panier (7), ceci jusqu'au dernier. De même, les balises coniques (9) sont récupérées puis replacées dans les anneaux (8) et l'entraîneur peut rentrer au vestiaire avec son chariot mobile et l'ensemble de ses accessoires, ceci en un seul voyage.

L'opération consistant à sortir les ballons (6) du panier (7) n'est guère commode, surtout si le panier (7) est profond et qu'il y a beaucoup de ballons. Aussi, selon la caractéristique principale de la présente invention, le chariot mobile (1) présente des moyens pour libérer tout ou partie des ballons (6) placés dans le panier (7). Cette caractéristique est particulièrement appréciable car elle permet de faire débuter très rapidement les séances d'entraînement sans perte de temps et avec un minimum d'effort.

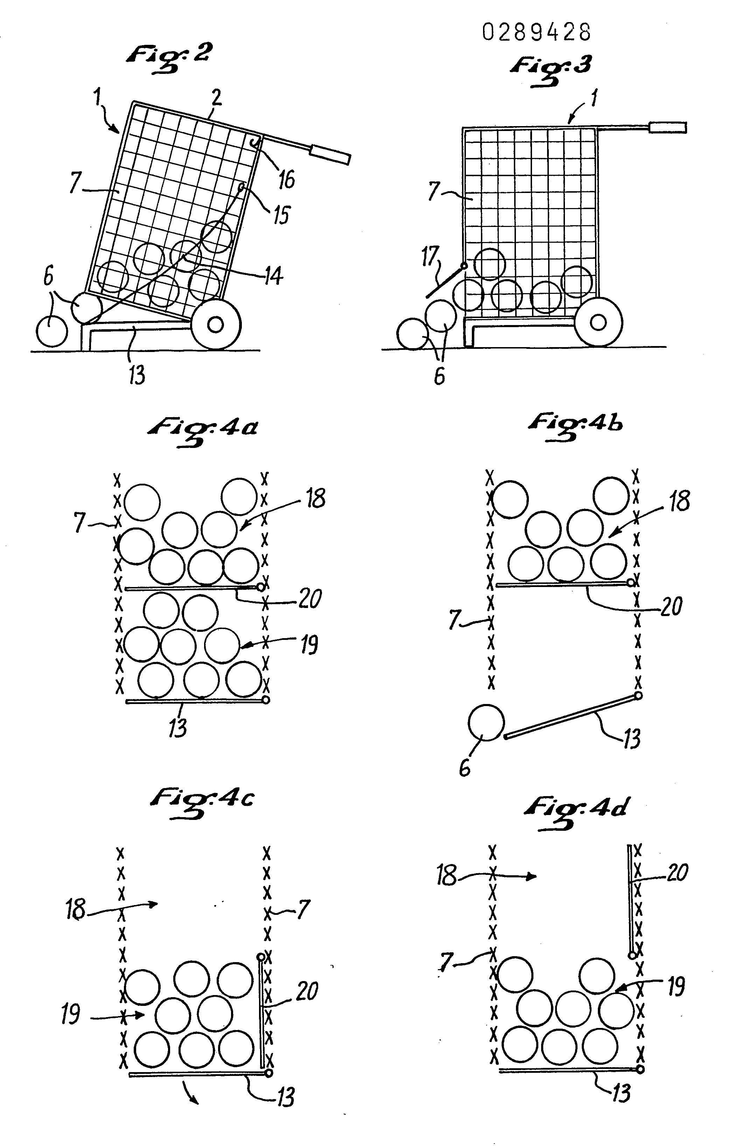

Ces moyens pour libérer les ballons (6) du panier (7) peuvent par exemple se présenter sous la forme d'un fond (13) de panier (7) articulé, tel qu'illustré à la figure 2. Ce fond (13) qui s'ouvre permet de libérer les ballons (6) qui s'échappent directement sur le terrain de jeu. Le fond articulé (13) est manoeuvré par un dispositif de retenue (14) tel qu'une tringle, une chaîne ou une corde, dont l'extrémité présente un anneau (15) susceptible d'être fixé à un crochet (16) placé à la partie supérieure du châssis (2). Lorsque l'anneau (15) est détaché du crochet (16), le fond (13) n'est plus soutenu et s'articule, ce qui provoque la libération des ballons (6). On peut d'ailleurs contrôler l'ouverture créée par l'inclinaison plus ou moins forte du châssis (2). Lorsque la quantité suffisante de ballons a été libérée, on fait reposer le châssis (2) sur le fond (13) et on replace les moyens de retenue (14) en place, c'est-à-dire que l'on refixe l'anneau (15) au crochet (16).

On pourra également utiliser un autre moyen que la chaîne pour libérer le fond, tel que par exemple une pédale (22).

La figure 3 schématise une autre réalisation des moyens pour libérer tout ou partie des ballons placés dans le panier (7). Selon cette conception, le panier (7) présente dans sa partie inférieure une trappe (17) escamotable qui, en cas d'ouverture, permet de libérer les ballons (6).

Dans certaines circonstances, par exemple lorsque l'entraînement ne concerne que la moitié de l'équipe, il est avantageux de contrôler avec précision la libération des ballons pour en limiter le nombre. Ainsi, le panier (7) peut être divisé en compartiments tels que schématisés à la figure 4a où le panier (7) comporte deux compartiments (18, 19) séparés par une cloison (20). Auquel cas, il est possible de contrôler les ballons contenus dans chacun des compartiments (18) et (19). Dans l'exemple choisi ici, seulement deux compartiments ont été adoptés, néanmoins un nombre plus élevé aurait également pu être envisagé.

Pour libérer les ballons (6) du compartiment inférieur, il suffit d'ouvrir le fond (13) tel qu'illustré à la figure 4b, les ballons contenus dans le compartiment supérieur (18) étant retenus par la cloison (20).

En manoeuvrant la cloison articulée (20), il est possible de faire descendre les ballons retenus dans le compartiment (18) jusque dans le compartiment (19) et de les libérer en ouvrant le fond (13) tel qu'illustré à la figure 4c.

Pour le rangement des ballons, on replie la cloison intermédiaire (20) pour introduire les ballons dans le compartiment (19) puis on rabat la cloison (20) de façon à compartimenter le panier (7) et on poursuit le remplissage en plaçant les ballons dans le compartiment (18) jusqu'à se retrouver dans le cas de la figure 4a.

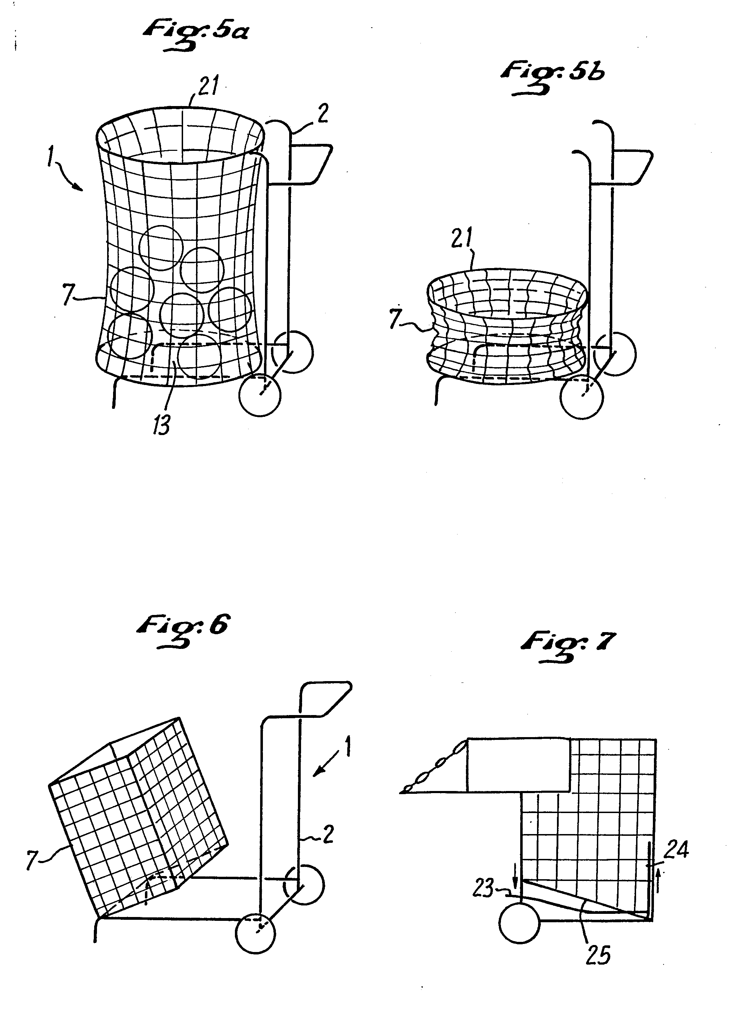

La figure 5a illustre un chariot mobile dont la construction du panier (7) de rangement des ballons est particulièrement économique. Selon cette réalisation, les parois du panier (7) sont réalisées en filet souple suspendu à une boucle rigide (21) accrochée de façon amovible au châssis (2). De la sorte, pour libérer les ballons, il suffit de détacher la boucle (21) du châssis (2) tel qu'illustré à la figure 5d. La boucle (21) n'est alors plus soutenue et le filet (7) peut se replier de telle sorte que les parois s'escamotent et la libération des ballons est ainsi automatiquement réalisée.

On peut d'ailleurs très facilement limiter le nombre de ballons libérés en abaissant la boucle (21) jusqu'à la hauteur souhaitée correspondant au nombre de ballons à libérer puis en replaçant la boucle (21) sur le châssis (2) tel qu'illustré à la figure 5a pour conserver dans le panier (7) les ballons non nécessaires à l'entraînement.

Une autre réalisation des moyens de libération des ballons est illustrée à la figure 6 dans laquelle le chariot (1) comporte un panier (7) basculant, ce qui permet en inclinant ledit panier (7) de lâcher les ballons en quantité voulue.

Quelle que soit la forme des moyens de libération envisagés, il est souhaitable que le fond du panier (7) soit grillagé ceci pour permettre un nettoyage facile des ballons. En effet, dans ce cas, il suffit de passer un jet d'eau à travers les parois grillagées du panier (7) pour laver les ballons sans avoir à les extraire dudit panier (7).

On pourra également prévoir d'évacuer les ballons (6) par dessous à l'aide d'un fond mobile actionné par un système de chaîne ou un système de pédale (22). On pourra aussi prévoir l'évacuation des ballons par n'importe quel côté du chariot à l'aide d'une trappe (24) qui se lève verticalement grâce à un système de pédale, les ballons (6) étant propulsés vers l'extérieur de par le fait que la grille du fond est soudée avec une pente (25). En appuyant sur la pédale (22), la grille (24) se lève ce qui provoque l'évacuation des ballons qui est facilitée par la pente (25).

D'autres mises en oeuvre de la présente invention, à la portée de l'Homme de l'Art, auraient également pu être envisagées sans pour autant sortir du cadre de la présente invention.

## Revendications

1. Chariot mobile de transport d'accessoires sportifs, destiné notamment à assister les entraîneurs d'équipes de football, rugby, les éducateurs sportifs ou les moniteurs d'éducation physique et sportive utilisant des ballons, qui comprend un châssis (2) monté sur roues (3) et une réserve de ballons (6) stockée dans un panier (7) fixé au châssis (2), **caractérisé** par le fait qu'il présente des moyens pour libérer tout ou partie des ballons (6) placés dans le panier (7).

2. Chariot mobile, selon la revendicaton 1, **caractérisé** par le fait que les moyens se présentent sous la forme d'un fond (13) mobile du panier (7).

3. Chariot mobile, selon la revendication 1, **caractérisé** par le fait que les moyens se présentent sous la forme d'une trappe (17) escamotable.

4. Chariot mobile, selon la revendication 2, **caractérisé** par le fait que le fond (13) articulé du panier (7) est manoeuvré par un dispositif de retenue (14).

5. Chariot mobile, selon la revendication 1, **caractérisé** par le fait que le panier (7) est divisé en compartiments (18, 19).

6. Chariot mobile, selon la revendication 1, **caractérisé** par le fait que le panier (7) est formé d'une paroi en filet souple suspendu à une boucle rigide (21) accrochée de façon amovible au châssis (2).

7. Chariot mobile, selon la revendication 1, **caractérisé** par le fait que les moyens de libération des ballons se présentent sous la forme d'un panier (7) basculant.

8. Chariot mobile, selon la revendication 1, **caractérisé** par le fait que le panier (7) présente des parois et un fond grillagés.

9. Chariot mobile, selon la revendication 1, **caractérisé** par le fait que les ballons (6) peuvent être évacués par dessous à l'aide d'un fond mobile actionné par un système de chaîne ou un système de pédale (22).

10. Chariot mobile, selon la revendicaton 1, **caractérisé** par le fait que les ballons (6) peuvent être évacués par n'importe quel côté du chariot à l'aide d'une trappe (24) qui se lève verticalement grâce à un système de pédale, les ballons (6) étant propulsés vers l'extérieur de par le fait que la grille du fond est soudée avec une pente (25).

0289428

*Fig. 1*

0289428

*Fig.2*

*Fig.3*

*Fig.4a*

*Fig.4b*

*Fig.4c*

*Fig.4d*

0289428

Fig. 5a

Fig. 5b

Fig. 6

Fig. 7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-4 194 779  (I. OUHASHI) <br> * En entier * | 1,2 | B 62 B    3/04 <br> A 63 B   47/02 |
| A | | 4,6,9 | |
| Y | US-A-4 217 073  (R.L. PROPST) <br> * En entier * | 1,2 | |
| A | | 7 | |
| A | US-A-3 960 299  (P. HOLLINGER) <br> * Figures * | 1,3 | |
| A | US-A-3 181 697  (G. REINER) <br> * Figures * | 10 | |

| DOMAINES TECHNIQUES RECHERCHES (Int. Cl.4) |
|---|
| A 63 A <br> B 62 B |

Le présent rapport a été établi pour toutes les revendications

| Lieu de la recherche | Date d'achèvement de la recherche | Examinateur |
|---|---|---|
| LA HAYE | 27-07-1988 | FRANKS B.G. |

EPO FORM 1503 03.82 (P0402)